# EUROPEAN PATENT SPECIFICATION

(11) **EP 0 826 605 B1**
(45) Date of publication and mention of the grant of the patent: **21.05.2003**
(21) Application number: 97202630.6
(22) Date of filing: 28.08.1997
(51) Int. Cl.: B65D 19/44

(54) **Transport and sales packaging for wheelbarrows**
Transport- und Verkaufspackung für Schubkarren
Conditionnement pour le transport et la vente de brouettes

(30) Priority: 28.08.1996 EP 96202393
(43) Date of publication of application: 04.03.1998
(73) Proprietor: Fort Kruiwagens B.V., 4004 JV Tiel (NL)
(72) Inventor: Van Beuzekom, Jan Leendert, 3363 CN Sliedrecht (NL)
(74) Representative: Bartelds, Erik

(56) References cited:
- FR-A- 2 405 877
- US-A- 4 344 368

## Description

The invention relates to a combination of a transport and sales packaging and at least one wheelbarrow consisting of a limited number of components such as containers frames and wheels arranged therein, comprising a carrier and means arranged thereon for separately receiving the different components. The combination of a transport packaging and at least one wheelbarrow having the features of the pre-characterizing part of claim 1 is known from FR-A-2 405 877.

Relatively voluminous objects such as wheelbarrows can be transported in large numbers only with great difficulty. The storage or display of wheelbarrows in for instance retail areas also poses great problems, such as the amount of space occupied. As a result, only small numbers of wheelbarrows will be on display or held in stock at most sales outlets.

It has therefore already been proposed to transport and display the wheelbarrows not in assembled state but as construction kit. It is known for this purpose to stack on a pallet a large number of wheelbarrow components such as frames, containers and wheels and thus transport these to for instance a sales area, where they are then placed separately in show units or displays. A purchaser can then take away the different required components separately and subsequently assemble them himself into a wheelbarrow. A drawback to this known system is that a relatively large number of operations are required to transfer the components from the transport pallet to the display.

The above-mentioned prior art document FR-A-2 405 877 discloses a transport packaging for wheelbarrows comprising a substantially flat carrier and two U-shaped frames bordering a space on the carrier. The frames include grooves for receiving ties. A side wall is arranged on one side of the carrier for retaining loose articles.

The invention has for its object to provide a combination of transport and sales packaging wheelbarrows which allows the wheelbarrows to be transported and displayed in a sales area in efficient manner. According to the invention this is achieved in that the receiving means comprise at least one suspension member on which the wheelbarrow frame(s) is/are suspended and at least one support member against which the wheelbarrow container(s) is/are supported. The objects can thus be transported and displayed together as components in considerable numbers, wherein however the removal of the separate components from the packaging can be carried out in simple manner by the purchaser himself. Moreover, the use of a suspension member for the frames and a support member for the containers allows the different components to be placed on the carrier as efficiently as possible, depending on their specific shape.

A structurally simpler packaging is obtained when the suspension member and the support member are formed integrally. The suspension member and the support member can herein take the form of a lying U-shaped element which is fixed to the carrier with one leg. In this manner a standard pallet can be converted to a transport and sales packaging with a few very simple constructional operations.

The carrier preferably has standardized dimensions. This offers great advantages in transport and storage. When the carrier is moreover a re-usable pallet, the costs of the packaging can be greatly reduced, which is particularly important in retail markets where the cost of processing used packagings is passed on to the purchaser.

The invention will now be elucidated on the basis of an embodiment, wherein reference is made to the annexed drawing, in which:
fig. 1 is a perspective view of a transport and sales packaging which forms part of the combination according to the invention,

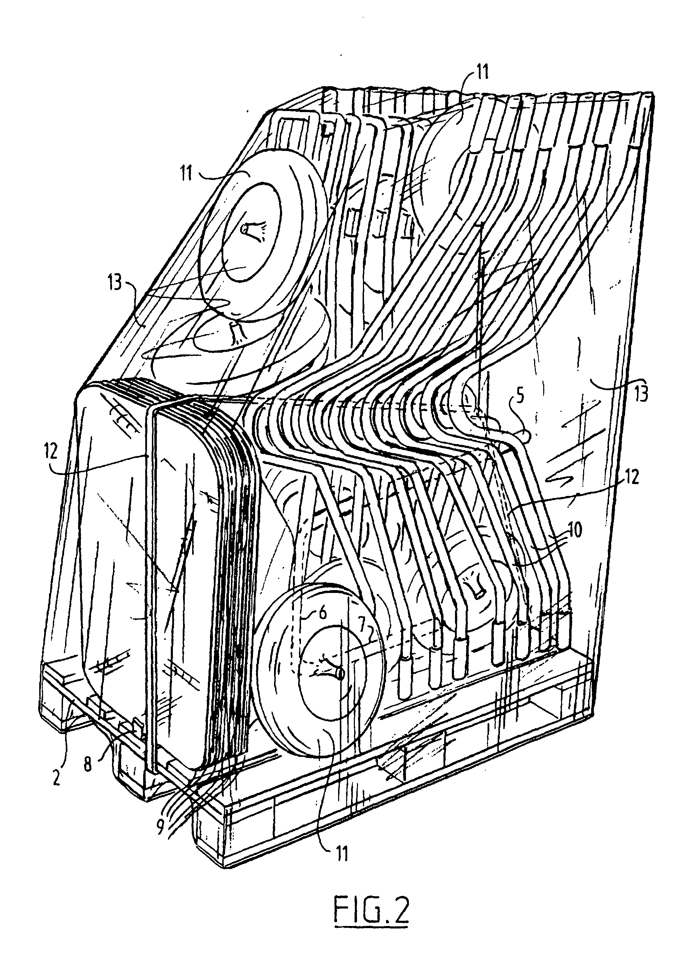

fig. 2 is a view corresponding with fig. 1 of the packaging in combination with the wheelbarrows, and
fig. 3 is a perspective view of a wheelbarrow constructed from the different components on the transport and sales packaging.

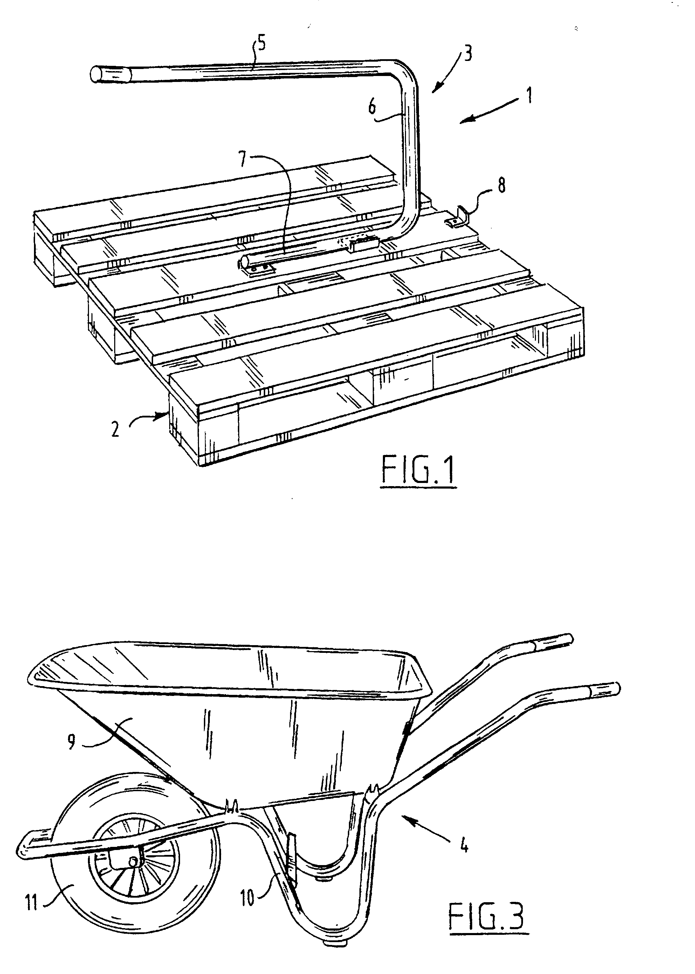

A transport and sales packaging 1 (fig. 1) comprises a carrier 2 and means 3 arranged thereon for separately receiving different components of a wheelbarrow 4 which is relatively voluminous but consists of a limited number of components (fig. 3). Carrier 2 herein has standardized dimensions and takes the form of a re-usable pallet. Such a pallet can be collected after use and, after removal of receiving means 3, can be applied in simple manner for other purposes. Charges associated with the processing of the carrier can hereby be avoided, whereby the cost of the packaging is considerably reduced.

The receiving means 3 comprise a suspension member 5 and a support member 6. Suspension member 5 and support member 6 are herein formed integrally, wherein support 6 is mounted on carrier 2 and suspension member 5 extends practically horizontally from the upper end of support member 6. In order to obtain a structurally simple embodiment the suspension member 5 and the support member 6 take a tubular form. For fixing of support member 6 to carrier 2 the tube is bent substantially in a U-shape so that a leg 7 is formed with which the tubular element can be fastened onto carrier 2. Further arranged on carrier 2 is a stop 8, which is placed at a distance from support member 6 and co-acts therewith to secure the wheelbarrow containers 9, supporting against support member 6. A plurality of wheelbarrow frames 10 can be suspended on suspension member 5, wherein the length of suspension member 5 and the distance between support member 6 and stop 8 are chosen such that the same number of frames 10 and containers 9 can be arranged on carrier 2. In the shown example adjacent wheelbarrow frames 10 are suspended in differing directions, i.e. alternately with their nose or handles directed upward. An even denser packing is hereby possible. The accompanying wheelbarrow wheels 11 are then simply placed between the frames 10.

The different components 9 and 10 arranged in packaging 1 are then secured against shifting by a tensioning band 12, which is arranged therearound after filling of the packaging 1. The entire filled transport and sales packaging 1 is subsequently wrapped with a foil 13, whereby the content of the packaging is protected against damage and the effects of weather and wind. Foil 13 is manufactured from a re-usable material such as for instance polyethylene. Packaging 1 is thus ready for transport and, as a result of the standardized dimensions of the carrier 2, which can form a so-called "Europallet", can be easily transported and stored in standard transport and storage units. On arrival of packaging 1 in a sales area the foil 13 can be removed and the tensioning band 12 can be released, whereafter customers can simply take the different required components 9, 10 and 11 form the packaging 1 and assemble these themselves into a wheelbarrow 4.

Due to the special form of packaging 1 the different components are well visible, so that customers can ascertain the condition thereof at a glance. Because they are received separately in packaging 1, the components are moreover easy to take out of the packaging without for instance a number of frames 10 first having to be removed to reach a container 9. After the contents have all been sold, the different parts of packaging 1 can be simply disassembled and re-used.

The invention thus provides a robust and easily handled packaging, with which wheelbarrows consisting of a small number of relatively large components can be transported and displayed at low cost.

## Claims

1. Combination of a transport and sales packaging (1) and at least one wheelbarrow (4) consisting of a limited number of components such as containers (9) frames (10) and wheels (11) arranged therein, comprising a carrier (2) and means (3) arranged thereon for separately receiving the different components (9,10,11), **characterized in that** the receiving means (3) comprise at least one suspension member (5) on which the wheelbarrow frame(s) (10) is/are suspended and at least one support member (6) against which the wheelbarrow container(s) (9) is/are supported.

2. Combination as claimed in claim 1, **characterized in that** the suspension member (5) and the support member (6) are formed integrally.

3. Combination as claimed in claim 2, **characterized in that** the suspension member (5) and the support member (6) take the form of a lying U-shaped element which is fixed to the carrier (2) with one leg (7).

4. Combination as claimed in any of the preceding claims, **characterized in that** the suspension member (5) and the support member (6) are dimensioned to receive a corresponding number of wheelbarrow frames and containers (9,10).

5. Combination as claimed in any of the preceding claims, **characterized by** a stop (8) co-acting "with the support member (6) and arranged at a distance therefrom on the carrier (2).

6. Combination as claimed in claims 4 and 5, **characterized in that** the support member (6) is adapted to support a plurality of wheelbarrow containers (9) placed obliquely thereagainst and resting on one of their edges, the stop (8) is adapted to lock the thus supported containers (9) against shifting, and **in that** the distance between the support member (6) and the stop (8) is determined by the number of containers (9) to be supported by the support member (6).

7. Combination as claimed in any one of the preceding claims, **characterized in that** the carrier (2) has standardized dimensions.

8. Combination as claimed in claim 7, **characterized in that** the carrier (2) is a re-usable pallet.

## Patentansprüche

1. Kombination aus einer Transport- und Verkaufsverpackung (1) und mindestens einem Schubkarren (4), der wenige Bauteile, wie z. B. einen Behälter (9), einen Rahmen (10) und ein Rad (11) umfasst, die in der Verpackung (1) angeordnet werden, mit einem Träger (2) und darauf angeordneten Mitteln (3) zur separaten Aufnahme der verschiedenen Bauteile (9, 10, 11),
**dadurch gekennzeichnet,**
**dass** die Aufnahmemittel (3) mindestens ein Aufhängeelement (5), an dem der/die Schubkarrenrahmen (10) aufgehängt wird/werden, und mindestens ein Stützelement (6), an das der/die Schubkarrenbehälter (9) angelehnt wird/werden, umfassen.

2. Kombination nach Anspruch 1, **dadurch gekennzeichnet, dass** das Aufhängeelement (5) und das Stützelement (6) in einem Stück gebildet sind.

3. Kombination nach Anspruch 2, **dadurch gekennzeichnet, dass** das Aufhängeelement (5) und das Stützelement (6) die Form eines liegenden U-förmigen Elements aufweisen, das mit einem Arm (7) am Träger (2) befestigt ist.

4. Kombination nach einem der vorhergehenden Ansprüche, **dadurch gekennzeichnet, dass** das Aufhängeelement (5) und das Stützelement (6) so bemessen sind, dass sie eine einander entsprechende Anzahl an Schubkarrenbehältern (9) und Schubkarrenrahmen (10) aufnehmen.

5. Kombination nach einem der vorhergehenden Ansprüche, **gekennzeichnet durch** einen Anschlag (8), der mit dem Stützelement (6) zusammenwirkt und in einem bestimmten Abstand zu diesem auf dem Träger (2) angeordnet ist.

6. Kombination nach Anspruch 4 oder 5, **dadurch gekennzeichnet, dass** das Stützelement (6) so ausgebildet ist, dass mehrere Schubkarrenbehälter (9) daran angelehnt werden können und mit einem ihrer Ränder aufliegen, wobei der Anschlag (8) die auf diese Weise abgestützten Behälter (9) gegen Verrutschen sichert, und dadurch dass der Abstand zwischen dem Stützelement (6) und dem Anschlag (8) durch die Anzahl an Behältern (9), die vom Stützelement (6) gestützt werden sollen, bestimmt wird.

7. Kombination nach einem der vorhergehenden Ansprüche, **dadurch gekennzeichnet, dass** der Träger (2) normierte Abmessungen aufweist.

8. Kombination nach Anspruch 7, **dadurch gekennzeichnet, dass** es sich bei dem Träger (2) um eine wiederverwendbare Palette handelt.

## Revendications

1. Combinaison d'un emballage de transport et commercial (1) et d'au moins une brouette (4) comprenant un nombre limité de composants tels que des bacs (9), des cadres (10) et des roues (11) agencés dedans, comprenant un support (2) et des moyens (3) agencés dessus pour recevoir séparément les différents composants (9, 10, 11), **caractérisée en ce que** les moyens de réception (3) comprennent au moins une pièce de suspension (5) sur laquelle le(s) cadre(s) de brouette (10) est/sont suspendu(s) et au moins une pièce de support (6) contre laquelle le(s) récipient(s) de brouette (9) est/sont supportés.

2. Combinaison selon la revendication 1, **caractérisée en ce que** la pièce de suspension (5) et la pièce de support (6) sont venues de matière ensemble.

3. Combinaison selon la revendication 2, **caractérisée en ce que** la pièce de suspension (5) et la pièce de support (6) prennent la forme d'un élément en forme de U couché qui est fixé au support (2) avec une jambe (7).

4. Combinaison selon l'une quelconque des revendications précédentes, **caractérisée en ce que** la pièce de suspension (5) et la pièce de support (6) sont dimensionnées pour recevoir un nombre correspondant de cadres et de bacs de brouette (9,10).

5. Combinaison selon l'une quelconque des revendications précédentes, **caractérisée par** une butée (8) coopérant avec la pièce de support (6) et disposée à une certaine distance de celle-ci sur le support (2).

6. Combinaison selon les revendications 4 et 5, **caractérisée en ce que** la pièce de support (6) est prévue pour supporter une pluralité de bacs de brouette (9) placés en oblique les uns contre les autres et reposant sur un de leurs bords, la butée (8) est adaptée pour verrouiller les bacs ainsi supportés (9) contre tout glissement, et **en ce que** la distance séparant la pièce de support (6) et la butée (8) est déterminée par le nombre de bacs (9) devant être supportés par la pièce de support (6).

7. Combinaison selon l'une quelconque des revendications précédentes, **caractérisée en ce que** le support (2) présente des dimensions standardisées.

8. Combinaison selon la revendication 7, **caractérisée en ce que** le support (2) est une palette réutilisable.
